# EUROPEAN PATENT SPECIFICATION

(11) **EP 3 310 162 B1**
(45) Date of publication and mention of the grant of the patent: **02.08.2023**
(21) Application number: 16804035.0
(22) Date of filing: 25.05.2016
(51) Int. Cl.: A01N 35/10, A01N 37/50, A01N 43/16, A01N 43/18, A01N 25/02, A01N 25/04, A01N 25/22, A01N 25/30, A01P 13/00

(54) **SURFACTANT-STABILIZED CYCLOHEXANEDIOXIDE OXIME FORMULATIONS**
TENSIDSTABILISIERTE CYCLOHEXANDIOXID-OXIMFORMULIERUNGEN
FORMULATIONS D'OXIME DE DIOXYDE DE CYCLOHEXANE STABILISÉES PAR AGENT TENSIO-ACTIF

(30) Priority: 04.06.2015 US 201562171126 P
(43) Date of publication of application: 25.04.2018
(73) Proprietor: Arysta Lifescience North America LLC, Cary, North Carolina 27513 (US)
(72) Inventor: ZHANG, Hong, Cary, NC 27513 (US); MARTIN, Craig, Arlen, Morrisville, PA 19067 (US); STREET, John, Richard, Brixham Devon TQ5 0RQ (GB); GOLDSMITH, Andrew, Evelyn, Waterlooville Hampshire PO7 6TY (GB); GROOME, John, Martin, Havant Hampshire PO9 3BT (GB); BELL, Mark, Fareham Hampshire PO14 2LZ (GB)
(74) Representative: J A Kemp LLP
(86) International application number: PCT/US2016/034137
(87) International publication number: WO 2016/196130

(56) References cited:
- WO-A1-2006/050141
- WO-A1-2007/050090
- WO-A2-2011/011265
- US-A- 4 975 113
- US-A1- 2006 183 640
- US-A1- 2006 183 641
- US-A1- 2006 183 642
- US-A1- 2006 223 710
- US-A1- 2008 248 955
- US-A1- 2011 015 074

## Description

### FIELD OF THE INVENTION

Embodiments relate to formulations including a combination of a cyclohexanedione oxime herbicide or an agriculturally acceptable salt thereof, and a stabilizing surfactant as defined herein. The formulations, for example, have improved stability. Embodiments further relate to methods for controlling weeds using the composition of the invention. Embodiments additionally provide methods for producing a surfactant-stabilized herbicidal composition according to the invention.

### BACKGROUND OF THE INVENTION

Embodiments relate to an herbicidal compositions having improved storage stability and comprising a cyclohexanedione oxime or an agriculturally acceptable salt thereof as an active compound and a stabilizing surfactant as defined herein. Epoxidized oil fatty acids or epoxidized ester of a fatty acids are absent from the compositions.

Certain cyclohexanedione oximes have herbicidal activity against a variety of post-emergent grass weeds. Examples of cyclohexanedione oximes include clethodim, sethoxydim, cycloxydim, alloxydim, tralkoxydim, tepraloxydim, clefoxydim, clefoxyfim, butroxydim and profoxydim.

The chemical structure of clethodim is shown below in Formula I:

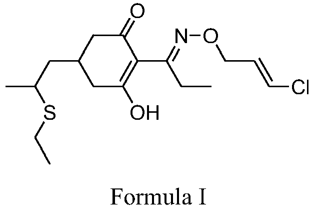

Clethodim is an important commercial herbicide within the class of cyclohexanedione oximes. It is a selective post-emergence cyclohexenone herbicide used to control annual and perennial grasses in a wide variety of broad leaf crops including soybeans, cotton, flax, peanuts, sunflowers, sugarbeets, potatoes, alfalfa and most vegetables. However, environmental factors, such as soil moisture, elevated temperature, UV and protic compounds contribute to the degradation of clethodim. Water and protic compounds will accelerate the degradation process. A protic compound, such as chloropropenol, which is a degration product of HOCAL, O-(3-Chloro-2-propenyl)hydroxylamine (an impurity in Clethodim) and clethodim, will accelerate degradation. Clethodim is of low persistence in most soils and is short-lived. The breakdown of clethodim is largely caused by heat, i.e. sunlight, high temperature. The main breakdown products in soils are sulfoxide, sulfone and oxazole sulfone. Clethodim can also rapidly degraded due to the formation of hydrochloric acid by an acid-catalyzed reaction and photolysis in the present of water on the leaf surfaces.

WO 2011/011265 describes a composition comprising a cyclohexanedione oxime or an agriculturally acceptable salt thereof, and a stabilizer comprising an epoxidized oil fatty acid or an epoxidized ester of a fatty acid.

### SUMMARY OF THE INVENTION

The invention concerns compositions including a cyclohexanedione oxime or an agriculturally acceptable salt thereof; and an effective amount of a stabilizing surfactant, wherein the composition is free of an epoxidized oil fatty acid or epoxidized ester of a fatty acid. The surfactant comprises a mixture of one or more anionic surfactants and one or more nonionic surfactants, wherein the anionic surfactant is selected from the group consisting of phosphoric mono- and di-esters of long-chain alcohols having 14 to 22 carbon atoms and the salts thereof, phosphoric mono-and di-esters of alkylene oxide addition products of long-chain alcohols having 14 to 22 carbon atoms and the salts thereof, alkylsulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms, and wherein the nonionic surfactant is selected from the group consisting of castor oil ethoxylates, alcohol ethoxylates, tristyrylphenol ethoxylates, ethoxylated sorbitan fatty acid esters and mixtures thereof. In one embodiment, the composition further includes a diluent. In another embodiment, the composition further includes one or more adjuvants. An adjuvant may include a crop oil.

The diluent can be a non-polar solvent. In one embodiment, a non-polar solvent is an aliphatic hydrocarbon, an aromatic hydrocarbon, or an alkyl ester. In another embodiment, a non-polar solvent is an aromatic hydrocarbon. In a further embodiment, an aromatic hydrocarbon is benzene, toluene, xylene, a substituted or an unsubstituted naphthalene, a monoalkylated aromatic, a polyalkylated aromatic, or mixtures thereof. In yet another embodiment, the non-polar solvent is an alkyl ester. In an additional embodiment, an alkyl ester is a methyl ester. In yet a further embodiment, an alkyl ester is a methyl ester of plant oil. In still a further embodiment, a plant oil is canola, linseed, safflower, soybean or a sunflower oil.

The surfactant comprises a mixture of an anionic surfactant and a nonionic surfactant. The anionic surfactant is selected from the group consisting of phosphoric mono- and di-esters of long-chain alcohols having 14 to 22 carbon atoms and the salts thereof, phosphoric mono-and di-esters of alkylene oxide addition products of long-chain alcohols having 14 to 22 carbon atoms and the salts thereof, alkylsulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms. The nonionic surfactant is selected from the group consisting of castor oil ethoxylates, alcohol ethoxylates, tristyrylphenol ethoxylates, ethoxylated sorbitan fatty acid esters, and mixtures thereof. In yet a further embodiment, the ethoxylated fatty acids is castor oil ethoxylates.

Embodiments further provide compositions including between 0.1 % and 95 % by weight of the cyclohexanedione oxime or an agriculturally acceptable salt or metal complex thereof. In some embodiments, a composition includes between 0.1 to about 30% by weight of the surfactant.

In certain embodiments, a cyclohexanedione oxime or agriculturally acceptable salt thereof is selected from methyl(E)-(RS)-3-[1-(alloxyimino)butyl]-4-hydroxy-6,6-dimethyl-2-oxocyclohex-3-enecarboxy-late), 5-(3-butyryl-2,4,6-trimethylphenyl)-2-(1-ethoxyiminopropyl)-3-hydroxycyclohex-2-enone), (2- { 1- [2-(4-chlorophenoxy)propoxyimino]butyl}-3-hydroxy-5-thian-3-ylcyclohex-2-enone), (±)-2-[(E)-1-[(E)-3-chloroallyloxyimino]propyl]-5-[2-(ethylthio)propyl]-3-hydroxycyclohex-2-enone), (±)-2-[1-(ethoxyimino)butyl]-3-hydroxy-5-thian-3-ylcyclohex-2-enone), (±)-(EZ)-2-(1-ethoxyiminobutyl)-5-[2-(ethylthio)propyl]-3-hydroxycyclohex-2-enone), (EZ)-(RS)-2-{1-[(2E)-3-chloroallyloxy-imino]propyl }-3-hydroxy-5-perhydropyran-4-ylcyclo-hex-2-en-1-one), 2-[1-(ethoxyimino)propyl]-3-hydroxy-5-mesitylcyclohex-2-enone) , and 2-[1-[[2-(4-chlorophenoxy)propoxy]imino]butyl]-3-hydroxy-5-(tetrahydro-2*H*-thiopyran-3-yl)-2-cyclohexen-1-one. In one embodiment, the cyclohexanedione oxime or agriculturally acceptable salt thereof comprises (±)-2-[(E)-1-[(E)-3-chloroallyloxyimino]propyl]-5-[2-(ethylthio)propyl]-3-hydroxycyclohex-2-enone), or a salt thereof. In a particular embodiment, a composition comprises an emulsifiable concentrate, wettable powder, granule, pellet, dust, oil or aerosol.

Also provided is a method of controlling weeds, said method comprising applying a composition as defined in claim 1 to a weed, a crop, or a habitat area. Thus, the invention provides a method of controlling weeds which includes applying a composition including a cyclohexanedione oxime or an agriculturally acceptable salt thereof, and an effective amount of a stabilizing surfactant to a weed, a crop, or a habitat area. The composition is free of an epoxidized oil fatty acid or epoxidized ester of a fatty acid. The surfactant comprises a mixture of one or more anionic surfactants and one or more nonionic surfactants, wherein the anionic surfactant is selected from the group consisting of phosphoric mono- and di-esters of long-chain alcohols having 14 to 22 carbon atoms and the salts thereof, phosphoric mono-and di-esters of alkylene oxide addition products of long-chain alcohols having 14 to 22 carbon atoms and the salts thereof, alkylsulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms, and wherein the nonionic surfactant is selected from the group consisting of castor oil ethoxylates, alcohol ethoxylates, tristyrylphenol ethoxylates, ethoxylated sorbitan fatty acid esters and mixtures thereof. Compositions applicable in the methods may further include additional components, such as a diluent and one or more adjuvants.

In particular embodiments, the method includes applying a composition including a cyclohexanedione oxime or agriculturally acceptable salt thereof selected from methyl(E)-(RS)-3-[1-(alloxyimino)butyl]-4-hydroxy-6,6-dimethyl-2-oxocyclohex-3-enecarboxy-late), 5-(3-butyryl-2,4,6-trimethylphenyl)-2-(1-ethoxyiminopropyl)-3-hydroxycyclohex-2-enone), (2-{1-[2-(4-chlorophenoxy)propoxyimino]butyl}-3-hydroxy-5-thian-3-ylcyclohex-2-enone), (±)-2-[(E)-1-[(E)-3-chloroallyloxyimino]propyl]-5-[2-(ethylthio)propyl]-3-hydroxycyclohex-2-enone), (±)-2-[1-(ethoxyimino)butyl]-3-hydroxy-5-thian-3-ylcyclohex-2-enone), (±)-(EZ)-2-(1-ethoxyiminobutyl)-5-[2-(ethylthio)propyl]-3-hydroxycyclohex-2-enone), (EZ)-(RS)-2-{1-[(2E)-3-chloroallyloxy-imino]propyl }-3-hydroxy-5-perhydropyran-4-ylcyclo-hex-2-en-1-one), 2-[1-(ethoxyimino)propyl]-3-hydroxy-5-mesitylcyclohex-2-enone) , and 2-[1-[[2-(4-chlorophenoxy)propoxy]imino]butyl]-3-hydroxy-5-(tetrahydro-2*H*-thiopyran-3-yl)-2-cyclohexen-1-one In a particular embodiment, the method includes applying a composition including (±)-2-[(E)-1-[(E)-3-chloroallyloxyimino]propyl]-5-[2-(ethylthio)propyl]-3-hydroxycyclohex-2-enone), or a salt thereof.

Methods include control of a weed, such as a grass plant. In certain embodiments, the grass plant is selected from the group consisting of Barley, Barnyard grass, Bermudagrass, Broadleaf Signalgrass, Bromes, Corn, Crabgrasses, Crowfootgrass, Fall Panicum, Fescue, Foxtail Barley, Foxtails, Green foxtail, Goosegrass, Grain Sorghum, Itchgrass, Junglerice, Large Crabgrass, Lovegrass, Oats, Orchardgrass, Perennial grasses, Quackgrass, Persian Darnel, Proso Millet, Red Rice, Rhizome Johnsongrass, Rye, Rygrasses, Seedling Johnsongrass, Shattercane, Smooth Crabgrass, Southwestern Cupgrass, Sprangetops, Texas Panicum, Volunteer Barley, Volunteer Oats, Volunteer Corn, Volunteer Canary Seed, Volunteer Wheat, Wheat,Wild Oats, Wild Proso Millet, Witchgrass, Woolly Cupgrass, Wirestem Muhly, and Yellow Foxtail.

The composition can be applied as a post-emergence or pre-emergence treatment. In one embodiment, the composition is applied to a crop plant in need of weed control or at risk of undesirable weeds. Such a crop plant can be, for example, any of canola, flax, peas, lentils, beans, linola, mustard, chickpeas, sunflowers, potatoes, seedling alfalfa, onions, and soybeans.

Also provided is a method for producing a composition as defined herein. The method comprises mixing the cyclohexaneione oxime with the one or more stabilizing surfactants as defined herein. Thus, the invention provides a method for producing a stabilized herbicidal composition the method comprising mixing a cyclohexanedione oxime or an agriculturally acceptable salt thereof with one or more stabilizers thereby producing a stabilized herbicidal composition. The stabilized herbicidal composition is free of an epoxidized oil fatty acid or epoxidized ester of a fatty acid. The surfactant comprises a mixture of one or more anionic surfactants and one or more nonionic surfactants, wherein the anionic surfactant is selected from the group consisting of phosphoric mono- and di-esters of long-chain alcohols having 14 to 22 carbon atoms and the salts thereof, phosphoric mono-and di-esters of alkylene oxide addition products of long-chain alcohols having 14 to 22 carbon atoms and the salts thereof, alkylsulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms, and wherein the nonionic surfactant is selected from the group consisting of castor oil ethoxylates, alcohol ethoxylates, tristyrylphenol ethoxylates, ethoxylated sorbitan fatty acid esters and mixtures thereof. In an aspect, the method includes (a) mixing one or more stabilizers with a diluent to form a first mixture; (b) adding one or more adjuvants to the first mixture to form a second mixture; and (c) adding a cyclohexanedione oxime to the second mixture, thereby producing a stabilized herbicidal composition.

### DETAILED DESCRIPTION OF THE PREFERRED EMBODIMENTS

The invention concerns, *inter alia,* stabilized herbicide compositions. The composition includes an herbicidal cyclohexanedione oxime or an agriculturally acceptable salt thereof, and an effective amount of a stabilizing surfactant as defined herein. The stabilizing surfactant is the primary component conferring stabilizing effects on the cyclohexanedione oxime. Thus, for example, it has been indicated that epoxidized oil fatty acids or epoxidized esters of fatty acids may be provided as stabilizing agents. Such agents are specifically excluded from the compositions disclosed herein. Thus, in some embodiments, there are provided compositions comprising an herbicidal cyclohexanedione oxime or an agriculturally acceptable salt thereof, and an effective amount of a stabilizer consisting essentially of a stabilizing surfactant. In some embodiments, there are provided compositions comprising an herbicidal cyclohexanedione oxime or an agriculturally acceptable salt thereof, and an effective amount of a stabilizer consisting of a stabilizing surfactant. In some embodiments, there are provided compositions comprising an herbicidal cyclohexanedione oxime or an agriculturally acceptable salt thereof, and an effective amount of a stabilizer consisting essentially of a stabilizing surfactant and a second stabilizer that is not an epoxidized oil fatty acid or an epoxidized ester of a fatty acid. The composition of the invention comprises a herbicidal cyclohexanedione oxime or an agriculturally acceptable salt thereof, and an effective amount of a stabilizing surfactant, and the composition is free of an epoxidized oil fatty acid or epoxidized ester of a fatty acid.

As used herein "substantially free" means that the composition may contain trace amounts of epoxidized oil fatty acid or epoxidized ester of a fatty acid (such as less than 1%, or less than 0.5%, or less than 0.25%), but the amount of epoxidized oil fatty acid or epoxidized ester of a fatty acid present in the composition in such trace amounts do not have a material effect on the composition performance and stability. Such substantially free compositions can also be devoid or absent of epoxidized oil fatty acid or epoxidized ester of a fatty acid.

In various aspects, an herbicidal cyclohexanedione oxime or an agriculturally acceptable salt thereof is selected from the group consisting of Alloxydim (methyl(E)-(RS)-3-[1-(alloxyimino)butyl]-4-hydroxy-6,6-dimethyl-2-oxocyclohex-3-enecarboxy-late), or a salt, Butroxydim (5-(3-butyryl-2,4,6-trimethylphenyl)-2-(1-ethoxyiminopropyl)-3-hydroxycyclohex-2-enone), or a salt, Clefoxydim also known as BAS 625H (2-{1-[2-(4-Chlorophenoxy)propoxyimino]butyl}-3-hydroxy-5-thian-3-ylcyclohex-2-enone), or a salt, Clethodim ((±)-2-[(E)-1-[(E)-3-Chloroallyloxyimino]propyl]-5-[2-(ethylthio)propyl]-3-hydroxycyclohex-2-enone), or a salt, Cycloxydim((±)-2-[1-(ethoxyimino)butyl]-3-hydroxy-5-thian-3-ylcyclohex-2-enone), or a salt, Profoxydim 2-[1-[[2-(4-chlorophenoxy)propoxy]imino]butyl]-3-hydroxy-5-(tetrahydro-2*H*-thiopyran-3-yl)-2-cyclohexen-1-one, or a salt, Sethoxydim ((±)-(EZ)-2-(1-ethoxyiminobutyl)-5-[2-(ethylthio)propyl]-3-hydroxycyclohex-2-enone), or a salt, Tepraloxydim ((EZ)-(RS)-2-{1-[(2E)-3-Chloroallyloxy-imino]propyl }-3-hydroxy-5-perhydropyran-4-ylcyclo-hex-2-en-1-one), or a salt, and Tralkoxydim (2-[1-(ethoxyimino)propyl]-3-hydroxy-5-mesitylcyclohex-2-enone), or a salt thereof.

Cyclohexanedione oximes are commercially available. For example, Clethodim is provided by Valent U.S.A. Corporation and Arysta LifeScience North America, Sethoxydim and Alloxydim are produced by Nippon Soda Company or BASF Corporation, Cycloxydim and Profoxydim are produced by BASF Corporation, and Butroxydim is produced by CropCare Australia.

The concentration of cyclohexanedione oxime in the formulation can be expressed in the units of percentage or grams/liter. The percentage, by weight (or "weight percent"), of a cyclohexanedione oxime in the formulation can vary. In certain embodiments, the percentage by weight of a cyclohexanedione oxime in the formulation is between 0.1 % and 95 %. In other embodiments, the percentage by weight of a cyclohexanedione oxime in the formulation is between 0.5 % and 90 %. In additional embodiments, the percentage by weight of a cyclohexanedione oxime in the formulation is between 10 % and 70%. In further embodiments, the percentage by weight of the cyclohexanedione oximes in the formulation is between 10% and 60%. In still other embodiments, the percentage by weight of a cyclohexanedione oxime in the formulation is between 10% and 50%. In still further embodiments, the percentage by weight of a cyclohexanedione oxime in the formulation is between 20% and 50%. In still further embodiments, the percentage by weight of the cyclohexanedione oximes in the formulation is between 30% and 40%. Similarly, the grams/liter of a cyclohexanedione oxime in the formulation may range from 20 g/L to 800 g/L, or from 100g/L to 400 g/L.

The percentage by weight of the stabilizing surfactant in a formulation can be between about 0.1 % and 15 %, between about 1 % and 12%, or between about 1 % and 10%. Typically the amount of a stabilizer, (e.g. by weight) will be less than the amount of an herbicidal active ingredient. However, the amount may be determined based upon a particular stabilizer and active ingredient, optionally in combination with other ingredients, such as solvent/diluent and adjuvants. Typically, a formulation having from 3% to 8% of adjuvant may comprise from 1% to 5% stabilizer; a formulation having from 8% to 16% of adjuvant may comprise from 1% to 10% of stabilizer; and a formulation having from 17% to 30% adjuvant may comprise from 1% to 15% stabilizer.

As used herein, the terms "stabilization" or "stabilized," refers to an herbicidal composition with increased chemical and/or physical stability, or reduced degradation, as compared to an unstabilized herbicidal composition. The extent of stabilization can be measured by activity of an herbicide, or the amount of active (un-degraded) herbicide. For example, a stabilized herbicide will exhibit greater activity against one or more weeds than unstabilized herbicide after a period of time in storage, exposed to heat, light, moisture (water) or other conditions that result in a reduction of activity by degradation of the herbicide. In certain embodiments, a cyclohexanedione oxime contained in a formulation will degrade by no more than about 25% within a period of 24 months. In other embodiments, a cyclohexanedione oxime contained in a formulation will degrade by no more than about 15% within a period of 24 months. In further embodiments, a cyclohexanedione oxime contained in a formulation will degrade by no more than about 10% within a period of 24 months. In still other embodiments, a cyclohexanedione oxime contained in a formulation will degrade by no more than about 5% within a period of 24 months. In additional embodiments, a cyclohexanedione oxime contained in a formulation will degrade by no more than about 3% within a period of 24 months.

As used herein, the term "effective amount" when used in reference to a stabilizer, is an amount of stabilizer necessary to inhibit, reduce or prevent degradation of an active ingredient (e.g. herbicide) in the composition due to one or more external environmental effects, for example, exposure to sunlight (UV), moisture (e.g. humidity, water), and heat. Typically, an effective amount of stabilizer will prevent the active ingredient from degrading of no more than 25 % due to exposure of UV, moisture, or heat within a long period of time, say, a two-year period. In other embodiment, an effective amount of stabilizer will prevent the active ingredient from degrading of no more than about 15 % due to exposure of UV, moisture (e.g. humidity, water), or heat within a two-year period, or no more than about 10%, or nor more than about 5%.

Formulations can include one or more solvents. The amount of solvents in a formulation may range from 1% to 99%, or from 30% to 80%. Suitable solvents include, for example, a non-polar water-immiscible solvent, or a polar aprotic water miscible organic solvent. Non-polar solvents include, for example, substituted or unsubstituted aliphatic or aromatic hydrocarbons and esters of plant oils or mixtures thereof. Non-limiting examples of aromatic hydrocarbons include benzene or substituted benzene derivatives such as toluene, xylene, 1,2,4-trimethylbenzene, naphthalene or mixtures thereof. In one embodiment, a solvent includes a mixture of napthalen and 1,2,4-trimethylbenzene. In another embodiment, a solvent is Aromatic 150, a heavy aromatic naptha solvent containing <10% naphthalene and <1.7% 1,2,4-trimethylbenzene.

Alkyl esters can also be used as non-polar, water immiscible solvents. Plant oils may be esterified with various alcohols to form alkyl esters of plant oils. Fatty acids of these plant oils have 5 to 20, or 6 to 15 carbon atoms. Alkyl esters of plant oils include, without limitation, methyl, ethyl and butyl esters of canola (*B.napus*), linseed, safflower (*Carthamus tinctorius L*.), soybean and sunflower oils. In one embodiment, the solvent is a mixture of methyl esters. A specific non-limiting example of methyl esters is Agent 2416-21 manufactured by Stepan Company (22 W. Frontage Road, Northfield, Illinois).

Water-miscible polar aprotic solvents include, for example, alkyl lactates, isopropyl lactate, alkyl carbonates, polyethylene glycols, polyethylene glycol alkyl ethers, polypropylene glycols, and polypropylene glycol alkyl ethers, or mixtures thereof.

The composition may include one or more adjuvants. An adjuvant may enhance or improve herbicidal performance, for example. Adjuvants may be added to the composition at the time of formulation, or by the applicator to a mix prior to treatment. Adjuvants include, for example, surfactants (emulsifier), crop oil, fertilizers, dispersing agents, compatibility agents, foaming activators, foam suppressants, correctives, and spray colorants (dyes). An adjuvant may be present in any desired amount. For example, a formulation may contain 0.1% to 3% adjuvant, 3% to 8% of adjuvant, 8% to 16 % adjuvant, 17% to 30 % adjuvant, or 30% or (e.g. 40% or more) more adjuvant.

A surfactant may increase solubility of an active ingredient in a solution. A surfactant may also affect spray retention, droplet spreading, and dry rates. A surfactant may be anionic or nonionic. The composition comprises an anionic surfactant selected from the group consisting of: phosphoric mono- and di-esters of long-chain alcohols having 14 to 22 carbon atoms and the salts thereof; phosphoric mono-and di-esters of alkylene oxide addition products of long-chain alcohols having 14 to 22 carbon atoms and the salts thereof; alkylsulfates having 14 to 22 carbon atoms; polyoxyethylene alkyl ether sulfates of alcohols having 14 to 22 carbon atoms; alkane sulfonates having 14 to 22 carbon atoms; and olefin sulfonates having 14 to 22 carbon atoms.

The composition comprises a non-ionic surfactant selected from the group consisting ofcastor oil ethoxylates, alcohol ethoxylates, tristyrylphenol ethoxylates, ethoxylated sorbitan fatty acid esters and mixtures thereof. Castor oil ethoxylates include castor oil ethoxylates having at least 25, preferably 27 to 37 ethoxy units, such as Sunaptol.RTM. CA350 (castor oil ethoxylate with 35 ethoxy units) of Uniqema (formerly ICI Surfactants), Mergital.RTM. EL33 (castor oil ethoxylate with 33 ethoxy units) of Henkel KGaA, and Ukanil.RTM. 2507 (castor oil ethoxylate) of Uniqema.

Surfactants may be present in any desired amount. For example, a surfactant may be present in an amount of about 0.1 to about 30% by weight in the formulation. In a particular embodiment, a surfactant is present in an amount of about 1 to about 20 % by weight in the formulation. In another embodiment, a surfactant is present in an amount of about 5 to about 15 % by weight in the formulation.

An emulsifier is a type of surfactant typically used to keep emulsion well dispersed. Non-limiting examples of the emulsifier include Aerosol OT-100, Genapol XM 060, Synperonic A20, Soprophor BSU, Dehypon G2084, Rhodacal 70/B, Atlox 4817B, Nansa EVM 70/2E, Phenyl Sulphonate CAL, Agent 2201-76E, Agent 2201-76, Agent 2416-20, Emulpon CO-360, T-Det C-40^{®}, and Agnique^{™} SBO-10. Agent 2201-76 is manufactured by Stepan Company (22 W. Frontage Road, Northfield, Illinois), which is a blend of nonionic and anionic surfactants (82%). The ingredients in Agent 2201-76 are alkylbenzene sulfonate and fatty acid ethoxylate, aromatic petroleum hydrocarbon, 1-hexanol and naphthalene. Agent 2416-20 is also manufactured by Stepan Company (22 W. Frontage Road, Northfield, Illinois), which is a blend of nonionic and anionic surfactants (35-37%). Agent 2416-20 also includes aromatic petroleum hydrocarbon (57-58%), and naphthalene (6-7%). Emulpon CO-360 is manufactured by Akzo Nobel Chemicals Ltd. (525 West Van Buren, Chicago, Illinois), which contains ethoxylated castor oil (100% by weight) and oxirane (<0.001% by weight). T-Det C-40^{®} may be purchased from Harcros Organics (5200 Speaker Road., P.O. Box 2930, Kansas City, Kansas), or from Akzo Nobel Chemicals Ltd. (525 West Van Buren, Chicago, Illinois), which is a non-ionic emulsifier, and a brand of ethoxylated (polyethoxylated) castor oil. Agnique^{™} SBO-10 is manufactured by Cognix GmbH headquartered in Monheim, Germany, which contains alkoxylated triglycerides as an ethoxylated soybean oil.

A crop oil, or a crop oil concentrate, may be used to increase the efficacy of an herbicide formulation. Although not wishing to be bond by any particular theory, a crop oil is believed to keep the leaf surface moist longer than water, which in turn allows more time for the herbicide to penetrate, thereby increasing the amount of herbicide that will enter the plant (e.g. weed). A crop oil can improve uptake of herbicide by plant (e.g. weed). A crop oil can therefore improve, enhance, increase or promote herbicidal efficacy or activity. Crop oils may contained from 1% to 40% by weight, or 1% to 20% by weight in the formulation. A crop oil can be derived from either petroleum oil or vegetable oil. Non-limiting examples of crop oil include soybean oils and petroleum based oils.

The herbicidal compositions can be in customary formulations. Non-limiting examples include solutions, emulsions, suspensions, wettable powders, powders, dusts, pastes, soluble powders, granules, pellets, emulsifiable concentrate, oil spray, aerosol, natural and synthetic materials impregnated with active compound, and very fine capsules (e.g. in polymeric substances). In certain embodiments, the composition is in a form of an emulsifiable concentrate, wettable powder, granule, dust, oil spray or aerosol.

The formulations may optionally include adherent coatings. Such coatings include those that aid the active ingredient to adhere to the intended environment, for example, a weed. Adherent coatings include carboxymethylcellulose, natural and synthetic polymers in various forms, such as powders, granules or latexes. Other adherent coatings include gum arabic, polyvinyl alcohol and polyvinyl acetate. Phospholipids, such as cephalins and lecithins, and synthetic phospholipids are also examples of adherent coatings. Further additives may be mineral and vegetable oils.

Colourants can also be included in the formulations. Non-limiting examples are inorganic pigments, such as iron oxide, titanium oxide and Prussian Blue, and organic dyestuffs, such as alizarin dyestuffs, azo dye-stuffs and metal phthalocyanine dyestuffs, and trace nutrients such as salts of iron, manganese, boron, copper, cobalt, molybdenum and zinc.

Herbicidal compositions can be applied in the form of ready mixes. Herbicidal compositions can also be formulated individually and mixed upon use, i.e. applied in the form of tank mixes.

Herbicidal compositions can be used as such or in the form of their formulations, and furthermore also as mixtures with other herbicides, ready mixes or tank mixes. Herbicidal compositions may also be mixed with other active compounds, such as fungicides, insecticides, acaricides, nematicides, bird repellents, growth substances, plant nutrients and agents which improve soil structure. For particular application purposes, in particular when applied post-emergence, formulations such as mineral or vegetable oils which are tolerated by plants (for example the commercial product "Oleo DuPont 11E") or ammonium salts such as, for example, ammonium sulphate or ammonium thiocyanate, as further additives can be included.

Herbicidal compositions may also exclude any of the aforementioned. For example, other herbicides, fungicides, insecticides, acaricides, nematicides, bird repellents, growth substances, plant nutrients and agents which improve soil structure can be excluded or omitted from a composition.

Herbicidal compositions can be used as such, in the form of their formulations or in the forms prepared therefrom by dilution of a concentrated form, such as ready-to-use or concentrated liquids, solutions, suspensions, emulsions, or solids, such as, powders, pastes, granules and pellets. They are dispersed in the customary manner, for example by watering, spraying, atomizing, dusting or scattering.

Formulations can be produced by mixing or suspending one or more stabilizers, an active ingredient, and optionally an adjuvant, a diluent or a solvent. In certain embodiments, formulations can be produced, for example by first mixing or suspending one or more stabilizers with a diluent or solvent. Next, the appropriate amount of adjuvants is combined to the resulting mixture containing the stabilizers. An active ingredient, cyclohexanedione oxime, can added at the end and blended until the formulation becomes mostly or entirely homogeneous.

The method for producing a stabilized herbicidal composition includes mixing a cyclohexanedione oxime with one or more stabilizers thereby producing a stabilized composition. The method may comprise a) mixing one or more stabilizers with a diluent to form a first mixture; b) adding one or more adjuvants to the first mixture to form a second mixture; and c) adding a cyclohexanedione oxime to the second mixture, thereby producing a stabilized composition.

Desirable plants are generally referred to herein as "crop plants." The term "crop plants" as used herein, includes any edible or non-edible plant, including decorative, plant species with commercial value, which is planted and cultivated for commercial use. Thus, crop plants include floral and non-floral plants, trees, vegetable plants, turf, and ground cover. Non-limiting specific examples of crop plants include canola, flax, peas, lentils, beans, linola, mustard, chickpeas, sunflowers, potatoes, seedling alfalfa, onions, soybeans and turf grass. The term "plants" is meant to include germinant seeds, emerging seedlings, and established vegetation, including roots and above-ground portions (for example, leaves, stalks, flowers, fruits, branches, limbs, root, etc.).

The term "turf' used herein refers to grass which grow in areas in which they are desired, or purposely planned for and maintained, for example, a lawn. Turf also refers to a sod, where the surface layer of ground consisting of a mat of grass and grass roots.

Compositions include active herbicides against one or more species of weeds. In the broadest sense, the term "weed" refers to plants which grow in locations in which they are not desired. In other words, a weed is a plant in which in the context of a crop is undesirable due to competition for water, nutrients, sunlight, soil, etc. A grass plant is one example of weeds.

Weeds can be controlled using the compositions. Embodiments provide methods for controlling weeds. In one embodiment, a method includes applying (contacting) a composition comprising a cyclohexanedione oxime or agriculturally acceptable salt thereof, and a stabilizing surfactant to a weed, a crop or a plant habitat or area. Such methods are applicable to a plant including, but not limited to, one or more weeds described herein.

Herbicidal compositions can be applied before the weed has emerged (pre-emergence) or after the weed has emerged (post-emergence). They can be applied to all or a part of a weed, a crop or habitat area.

A weed can be a green plant, or a grass weed. The grass plant to be controlled is in a pre-emergent or post-emergent growth stage at the time of applying (contact) of an herbicidal composition.

In methods, "control" and "controlling" includes any adverse modifying or detrimental effect that includes any deviation from natural plant survival, growth or development. Specific non-limiting examples include inhibiting, reducing, or preventing growth of all or any part of a weed (root, stem, stalk, leaf, flower, branch, etc.), weed germination, weed maturation, weed spreading, or killing the weed.

Methods can be used to control one or more grasses. Examples of grass plant species against which the compositions and methods can be used include, but are not limited to, the following: Barley (Hordeum vulgare), Barnyard grass (Echinochloa crus-galli), Bermudagrass (Cynodon dactylon), Broadleaf Signalgrass (Brachiaria platphylla), Bromes (Bromus species), Corn (Zea mays), Crabgrasses (Digitaria species), Crowfootgrass (Dactyloctenium aegyptium), Fall Panicum (Panicum dichotomiflorum), Fescue (Festuca arundinacea), Foxtail Barley (Hordeum jubatum), Foxtails (Setaria species), Green Foxtail, Goosegrass (Eleusine indica), Grain Sorghum (Sorghum bicolor), Itchgrass (Rottboellia exaltata), Junglerice (Echinochloa colona), Large Crabgrass, Lovegrass (Eragrostis cilanensis), Oats (Avena sativa), Orchardgrass (Dactylis glomerata), Perennial grasses, Quackgrass (Agropyron repens), Persian Darnel, Proso Millet, Red Rice (Oryza sativa), Rhizome Johnsongrass (Sorghum halepense), Rye (Secale cereale), Rygrasses (Lolium species), Seedling Johnsongrass (Sorghum halepense), Shattercane (Sorghum bicolor), Smooth Crabgrass, Southwestern Cupgrass (Eriochlola gracillis), Sprangetops (Leptochloa species), Texas Panicum (Panicum texanum), Volunteer Barley, Volunteer Oats, Volunteer Corn, Volunteer Canary Seed, Volunteer Wheat, Wheat (Triticum aestivum),Wild Oats (Avena fatua), Wild Proso Millet (Panicum miliaceum), Witchgrass (Panicum capillare), Woolly Cupgrass (Eriochloa villosa), Wirestem Muhly (Muhlenbergia frondisa), and Yellow Foxtail.

The application rate varies depending, for example, on the crop or the targeted weed. In general, the application rate is from 0.01 kg/ha to 5.00kg/ha or from 0.03 kg/ha to 3.00kg/ha of the active ingredient. In some embodiments, the application rate can be expressed as grams of the active ingredient per hecatare (g a.i./ha), such as about 30 g a.i./ha to about 300 g. a.i./ha.

The terms "composition" and "formulation" as used herein are interchangeable.

Unless otherwise defined, all technical and scientific terms used herein have the same meaning as commonly understood by one of ordinary skill in the art. Although methods and materials similar or equivalent to those described herein can be used in the practice or testing, suitable methods and materials are described herein.

As used herein, the singular forms "a", "and," and "the" include plural referents unless the context clearly indicates otherwise.

As used herein, the term "about" refers to a measurable value such as a parameter, an amount, a temporal duration, and the like and is meant to include variations of +/-15% or less, preferably variations of +/-10% or less, more preferably variations of +/-5% or less, even more preferably variations of +/-1% or less, and still more preferably variations of +/-0.1% or less of and from the particularly recited value, in so far as such variations are appropriate to perform in the invention described herein. Furthermore, it is also to be understood that the value to which the modifier "about" refers is itself specifically disclosed herein.

As used herein, all numerical values or numerical ranges include integers within such ranges and fractions of the values or the integers within ranges unless the context clearly indicates otherwise. Thus, for example, reference to a range of 90-100%, includes 91%, 92%, 93%, 94%, 95%, 95%, 97%, etc., as well as 91.1%, 91.2%, 91.3%, 91.4%, 91.5%, etc., 92.1%, 92.2%, 92.3%, 92.4%, 92.5%, etc., and so forth. Reference to a range of 90-100% includes 92.2% to 97.5%, 91.5 to 94.5, etc. Reference to a series of ranges, such as, overlapping ranges between 0.1% and 15 %, and between 1% and 10%, include ranges between 0.1% and 1%, 0.1% and 10%, 1% and 15%, and 10% and 15%.

Embodiments are generally disclosed herein using affirmative language. The embodiments herein also specifically include embodiments in which particular subject matter is excluded, in full or in part, such as substances or materials, method steps and conditions, protocols, procedures, assays or analysis.

### EXAMPLES AND REFERENCE EXAMPLES

In the following examples, exemplary herbicidal formulations and other control herbicidal formulations are studied for their storage stabilities. In many cases, comparisons are made to similar commercially available herbicidal formulations which contain clethodim as the active ingredient.

In the following exemplary herbicidal formulations of the invention are made to similar commercially available herbicidal formulations that contain Clethodim as the active ingredient and studied for their storage stabilities at elevated temperature conditions.

### Formulation A-1

| | |
|---|---|
| Clethodim 70% Multi-use product (MUP) | 51.4% |
| Aerosol OT-100 (emulsifier) | 10.0% |
| Solvesso 150 ND (solvent) | 38.6% |

### Formulation A-2

| | |
|---|---|
| Clethodim 70% Multi-use product (MUP) | 51.4% |
| Genapol XM 060 (emulsifier) | 10.0% |
| Solvesso 150 ND (solvent) | 38.6% |

The other formulation were prepared in a similar way but changed surfactants according to the summary in following tables.

### Testing Methods

### Evaluation of Stability of Stabilized Clethodim Formulations

All formulations described above were subjected to a stability test at 25°C for two years. The formulations were stored at 54°C ± 2°C and evaluated at 7 and 14 days, and at -10°C ± 2°C as control and evaluated at 7 and 14 days. The percent by weight of Clethodim was determined at each time interval by High Performance Liquid Chromatography (HPLC) analysis. HPLC analysis was conducted under the following conditions.

### Reference Example 1

The formulations are summarized in Table 1. The moisture level, the percent Clethodim (%AI) and remaining percentages of Clethodim are illustrated in Table 1, too. The remaining percentages at -10°C are calculated as compared to the initial amount of Clethodim present according to the zero day analysis. The remaining percentages at 54°C are calculated as compared to either the initial amount at the zero day analysis or the analysis at -10°C at the same time intervals. The A series demonstrated the improved chemical stability for Clethodim formulations by choosing the stabilizing surfactants, however, the B series showed severe Clethodim degradation without the stabilizing surfactants at the same storage conditions.

### Example 2

The emulsion stability were tested following the standard protocol CIPAC MT 18.1.4
Table 2 illuminates the formulation containing a variety of ratios for non-ionic surfactant and ionic surfactant, and the emulsion stability at 1 and 4 hours in a tap water aqueous medium. The results indicate that the best emulsion performance was achieved at the ratio of 7:3 to non-ionic surfactant and ionic surfactant.

### Example 3

In Table 3, the formulations were prepared by using the different ratios of Soprophor BSU to Aerosol OT-100 and their emulsion stabilities were tested at 1 and 4 hours. It was confirmed that the best emulsion performance was achieved at the ratio of 7 to 3. Formulation E-11 is included for reference purposes.

### Example 4

Table 4 illuminates the impact of ionic surfactant on the emulsion stability by preparing the formulations containing Soprophor BSU and a variety of individual ionic surfactants.

### Example 5

Table 5 lists the emulsion testing results by comparing different ionic surfactants in the presence of non-ionic surfactant Synperonic A20, while Table 6 (included for reference purposes) shows the emulsion stability results for the control.

### Reference Example 6

In Table 7, the formulations were made by using the surfactants that demonstrated a negatively impact on the chemical stability of Clethodim EC formulations. The Clethodim retention of the samples stored at 54°C for 2 weeks was less than 77% by comparing the ones that were stored at -10°C at the same period of time.

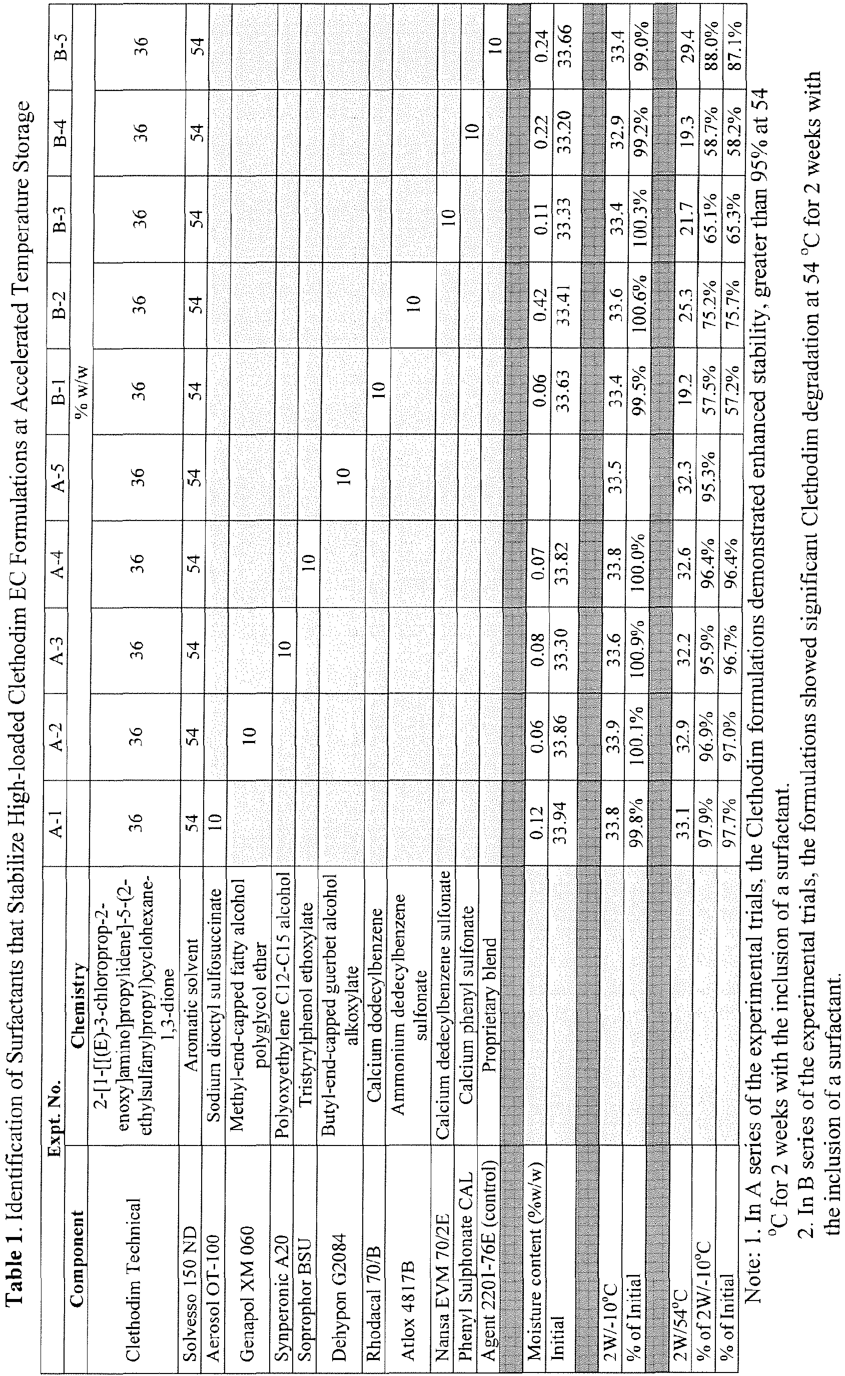

**Table 2. Emulsion Stability Tests for the Emulsifier Blends Including Genapol XM060 as a Non-ionic Surfactant with Different Ratios of Non-ionic to ionic surfactants**

| **Expt. No.** | E-1 | E-2 \| | E-3 | E-4 | E-5 | E-6 | E-7 | E-8 \| | E-9 | E-10 |
|---|---|---|---|---|---|---|---|---|---|---|
| **% Composition** | % w/w | | | | | | | | | |
| Genapol XM060 | 9 | 8 | 7 | 6 | 5 | 9 | 8 | 7 | 6 | 5 |
| Aerosol OT-100 | 1 | 2 | 3 | 4 | 5 | | | | | |
| Atlox 4817B | | | | | | 1 | 2 | 3 | 4 | 5 |
| 1 hr | 0.5 ml crm | nil | tr crm | tr crm | tr oil | 1 ml crm | tr crm | tr crm | st tr crm | nil |
| 4 hrs | 1 ml crm | tr oil | 0.5 ml oil | 0.3 ml oil/crm | 0.5 ml oil/crm | 1 ml crm | 0.5 ml crm | 0.5 ml crm | 0.2 ml crm | 0.2 ml oil |

| | | | | | | | | | | |
|---|---|---|---|---|---|---|---|---|---|---|
| Note: crm - creamy; nil - negligible; tr - trace; st - slight | | | | | | | | | | |

**Table 3. Emulsion Stability Tests for the Emulsifier Blends Including Soprophor BSU as a Non-ionic Surfactant with Different Ratios of Non-ionic to ionic surfactants**

| **Expt. No.** | E-11 | E-12 | E-13 | E-14 | E-15 | E-16 |
|---|---|---|---|---|---|---|
| **% Composition** | % w/w | | | | | |
| Soprophor BSU | 10 | 9 | 8 | 7 | 6 | 9.6 |
| Aerosol OT-100 | 0 | 1 | 2 | 3 | 4 | 2 |
| 1 hr | 1 ml crm | 0.3 ml crm | 0.2 ml crm | nil | 0.1 ml crm | 0.1 ml crm |
| 4 hrs | / | 0.7 ml crm | 0.4 ml crm | nil | 0.5 ml crm | 0.5 ml crm |

| | | | | | | |
|---|---|---|---|---|---|---|
| Note: crm - creamy; nil - negligible | | | | | | |

**Table 4. Emulsion Stability Tests for the Emulsifier Blends Including Soprophor BSU as a Non-ionic Surfactant with Different ionic surfactants**

| **Expt. No.** | E-17 | E-18 | E-19 | E-20 | E-21 | E-22 |
|---|---|---|---|---|---|---|
| **% Composition** | % w/w | | | | | |
| Soprophor BSU | 8 | 8 | 8 | 8 | 8 | 8 |
| Soprophor 4D/384 | 2 | | | | | |
| Crodasinic O | | 2 | | | | |
| Crodafos O10A | | | 2 | | | |
| Stepafac 8180 | | | | 2 | | |
| Crodafos CS2A | | | | | 2 | |
| Rhodafac RS610 | | | | | | 2 |
| 1 hr | 0.5 ml crm | st tr crm | 0.5 ml oil | 0.5 ml oil | 1 ml crm | 0.5 ml oil |
| 4 hrs | 1 ml crm | 0.2 ml crm | 1 ml oil | 1 ml oil | 1 ml erm | 1 ml oil |

| | | | | | | |
|---|---|---|---|---|---|---|
| Note: crm - creamy; nil - negligible; tr - trace; st - slight | | | | | | |

**Table 5. Emulsion Stability Tests for the Emulsifier Blends Including Synperonic A20 as a Non-ionic Surfactant**

| **Expt. No.** | E-23 | \| E-24 |
|---|---|---|
| **% Composition** | % w/w | |
| Synperonic A20 | 7 | 7 |
| Aerosol OT-100 | 3 | |
| Atlox 4817B | | 3 |
| 1 hr | 0.5 ml crm | 0.5 ml crm |
| 4 hrs | 1 ml crm | 1 ml erm |

| | | |
|---|---|---|
| Note: crm - creamy | | |

**Table 6. Emulsion Stability Tests for the Control**

| **Expt**. **No.** | E-25 | E-26 |
|---|---|---|
| **% Composition** | % w/w | |
| Agent 2201-76E | 10 | 6 |
| 1 hr | nil | nil |
| 4 hrs | nil | nil |

| | | |
|---|---|---|
| Note: nil - negligible | | |

**Table 7. Additional Screening on Anionic Surfactants that De-stabilize High-loaded Clethodim EC Formulations at Accelerated Temperature Storage**

| **Expt. No.** | | **C-1** | **C-2** | **C-3** | **C-4** | **C-5** | **C-6** |
|---|---|---|---|---|---|---|---|
| **Component** | **Chemistry** | | **% w/w** | | | | |
| Clethodim Technical | 2-[1-[[(E)-3-chloroprop-2-enoxy]amino]propylidene]-5-(2-ethylsulfanylpropyl)cyclohexane-1,3-dione | 36 | 36 | 36 | 36 | 36 | 36 |
| Solvesso 150 ND | Aromatic solvent | 54 | 54 | 54 | 54 | 54 | 54 |
| Soprophor 4D/384 | Tristyrylphenol ethoxylate sulfate | 10 | | | | | |
| Crodasinic O | Oleyl sarcosine | | 10 | | | | |
| Crodafos O10A | Oleyl ether phosphate | | | 10 | | | |
| Stepfac 8180 | Ethoxylate phosphate ester | | | | 10 | | |
| Crodafos CS2A | Polyoxyethylene cetyl-stearyl phosphate | | | | | 10 | |
| Rhodafac RS610 | Branched alcohol ethoxylate )hosphate | | | | | | 10 |
| | . | | | | | | |
| Moisture content (%w/w) | | 0.16 | 0.12 | 0.22 | 0.19 | 0.15 | 0.16 |
| | | | | | | | |
| 2W/-10°C | | 33.8 | 33.5 | 33.3 | 33.2 | 32.7 | 33.5 |
| 2W/54°C | | 25.6 | 25.7 | 16.2 | 9.7 | 10.2 | 12.2 |
| % of 2W/-10°C | | 75.8% | 76.7% | 48.6% | 29.2% | 31.3% | 36.5% |

| | | | | | | | |
|---|---|---|---|---|---|---|---|
| Note: All anionic surfactants listed in the Table demonstrated negative impact on the chemical stability of Clethodim 3EC formulations. The retention of Clethodim upon 2W/54C was less than 77% (w/w). | | | | | | | |

## Claims

1. A composition comprising:
a cyclohexanedione oxime or an agriculturally acceptable salt thereof; and
an effective amount of one or more stabilizing surfactants to provide a stabilized cyclohexanedione oxime, wherein the surfactant comprises a mixture of one or more anionic surfactants and one or more nonionic surfactants, wherein the anionic surfactant is selected from the group consisting of phosphoric mono- and di-esters of long-chain alcohols having 14 to 22 carbon atoms and the salts thereof, phosphoric mono-and di-esters of alkylene oxide addition products of long-chain alcohols having 14 to 22 carbon atoms and the salts thereof, alkylsulfates having 14 to 22 carbon atoms, polyoxyethylene alkyl ether sulfates of alcohols having 14 to 22 carbon atoms, alkane sulfonates having 14 to 22 carbon atoms, and olefin sulfonates having 14 to 22 carbon atoms, and wherein the nonionic surfactant is selected from the group consisting of castor oil ethoxylates, alcohol ethoxylates, tristyrylphenol ethoxylates, ethoxylated sorbitan fatty acid esters and mixtures thereof;
wherein the composition is free of an epoxidized oil fatty acid or epoxidized ester of a fatty acid.

2. The composition of claim 1, further comprising a diluent, wherein the diluent is a non-polar solvent which is an aliphatic hydrocarbon, an aromatic hydrocarbon, or an alkyl ester, wherein the aromatic hydrocarbon is benzene, toluene, xylene, a substituted or an unsubstituted naphthalene, a monoalkylated aromatic, a polyalkylated aromatic, or mixtures thereof, and wherein the alkyl ester is a methyl ester of plant oil wherein the plant oil is canola, linseed, safflower, soybean or a sunflower oil.

3. The composition of claim 1, further comprising one or more adjuvants, wherein the one or more adjuvant comprises a crop oil.

4. The composition of claim 1, comprising between 0.1 % and 95 % by weight of the cyclohexanedione oxime or an agriculturally acceptable salt or metal complex thereof.

5. The composition of claim 1, comprising between 20 g/L to 800 g/L of the cyclohexanedione oxime or an agriculturally acceptable salt or metal complex thereof.

6. The composition of claim 1, comprising between 0.1 % and 30% by weight of the one or more stabilizing surfactants.

7. The composition of claim 2, comprising between 1% to 99% by weight of the diluent or solvent, or comprising between 10% to 80% by weight of the solvent.

8. The composition of claims 1-7, wherein the nonionic surfactant is selected from the group consisting of castor oil ethoxylates, tristyrylphenol ethoxylates, ethoxylated sorbitan fatty acid esters and mixtures thereof.

9. The composition of claims 1-8, wherein the cyclohexanedione oxime or agriculturally acceptable salt thereof is selected from the group consisting of methyl(E)-(RS)-3-[1-(alloxyimino)butyl]-4-hydroxy-6,6-dimethyl-2-oxocyclohex-3-enecarboxy-late), 5-(3-butyryl-2,4,6-trimethylphenyl)-2-(1-ethoxyiminopropyl)-3-hydroxycyclohex-2-enone), (2-{1-[2-(4-chlorophenoxy)propoxyimino]butyl}-3-hydroxy-5-thian-3-ylcyclohex-2-enone), (±)-2-[(E)-1-[(E)-3-chloroallyloxyimino]propyl]-5-[2-(ethylthio)propyl]-3-hydroxycyclohex-2-enone), (±)-2-[1-(ethoxyimino)butyl]-3-hydroxy-5-thian-3-ylcyclohex-2-enone), (±)-(EZ)-2-(1-ethoxyiminobutyl)-5-[2-(ethylthio)propyl]-3-hydroxycyclohex-2-enone), (EZ)-(RS)-2-{1-[(2E)-3-chloroallyloxy-imino]propyl }-3-hydroxy-5-perhydropyran-4-ylcyclo-hex-2-en-1-one), 2-[1-(ethoxyimino)propyl]-3-hydroxy-5-mesitylcyclohex-2-enone), and 2-[1-[[2-(4-chlorophenoxy)propoxy]imino]butyl]-3-hydroxy-5-(tetrahydro-2H-thiopyran-3-yl)-2-cyclohexen-1 -one.

10. The composition of claims 1-8, wherein the cyclohexanedione oxime or agriculturally acceptable salt thereof comprises (±)-2-[(E)-1-[(E)-3-chloroallyloxyimino]propyl]-5-[2-(ethylthio)propyl]-3-hydroxycyclohex-2-enone), or a salt thereof.

11. The composition of claims 1-8, wherein the composition is in the form of an emulsifiable concentrate, a microemulsion, a wettable powder, a granule, a pellet, a dust, an oil or aerosol, a suspension concentrate, or a capsule.

12. A method of controlling weeds, said method comprising applying a composition as defined in claim 1 to a weed, a crop, or an habitat area.

13. The method of claim 12, wherein the composition further comprises a diluent or one or more adjuvants.

14. The method of claim 12, wherein the cyclohexanedione oxime or agriculturally acceptable salt thereof is selected from the group consisting of methyl(E)-(RS)-3-[1-(alloxyimino)butyl]-4-hydroxy-6,6-dimethyl-2-oxocyclohex-3-enecarboxy-late), 5-(3-butyryl-2,4,6-trimethylphenyl)-2-(1-ethoxyiminopropyl)-3-hydroxycyclohex-2-enone), (2-{1-[2-(4-chlorophenoxy)propoxyimino]butyl}-3-hydroxy-5-thian-3-ylcyclohex-2-enone), (±)-2-[(E)-1-[(E)-3-chloroallyloxyimino]propyl]-5-[2-(ethylthio)propyl]-3-hydroxycyclohex-2-enone), (±)-2-[1-(ethoxyimino)butyl]-3-hydroxy-5-thian-3-ylcyclohex-2-enone), (±)-(EZ)-2-(1-ethoxyiminobutyl)-5-[2-(ethylthio)propyl]-3-hydroxycyclohex-2-enone), (EZ)-(RS)-2-{ 1-[(2E)-3-chloroallyloxy-imino]propyl }-3-hydroxy-5-perhydropyran-4-ylcyclo-hex-2-en-1-one), 2-[1-(ethoxyimino)propyl]-3-hydroxy-5-mesitylcyclohex-2-enone), and 2-[1-[[2-(4-chlorophenoxy)propoxy]imino]butyl]-3-hydroxy-5-(tetrahydro-2H-thiopyran-3-yl)-2-cyclohexen-1 -one.

15. The method of claim 12, wherein the cyclohexanedione oxime or agriculturally acceptable salt thereof comprises (±)-2-[(E)-1-[(E)-3-chloroallyloxyimino]propyl]-5-[2-(ethylthio)propyl]-3-hydroxycyclohex-2-enone), or a salt thereof.

16. The method of claim 12, wherein the weed is a grass plant selected from the group consisting of Barley, Barnyard grass, Bermudagrass, Broadleaf Signalgrass, Bromes, Corn, Crabgrasses, Crowfootgrass, Fall Panicum, Fescue, Foxtail Barley, Foxtails, Green foxtail, Goosegrass, Grain Sorghum, Itchgrass, Junglerice, Large Crabgrass, Lovegrass, Oats, Orchardgrass, Perennial grasses, Quackgrass, Persian Darnel, Proso Millet, Red Rice, Rhizome Johnsongrass, Rye, Rygrasses, Seedling Johnsongrass, Shattercane, Smooth Crabgrass, Southwestern Cupgrass, Sprangetops, Texas Panicum, Volunteer Barley, Volunteer Oats, Volunteer Corn, Volunteer Canary Seed, Volunteer Wheat, Wheat,Wild Oats, Wild Proso Millet, Witchgrass, Woolly Cupgrass, Wirestem Muhly, and Yellow Foxtail.

17. The method of claim 12, wherein the composition is applied as a post-emergence treatment.

18. The method of claim 12, wherein the composition is applied to a crop plant in need of weed control or at risk of undesirable weeds, wherein the crop plant is any of canola, flax, peas, lentils, beans, linola, mustard, chickpeas, sunflowers, potatoes, seedling alfalfa, onions, and soybeans.

19. A method for producing a composition as defined in claim 1, the method comprising mixing the cyclohexanedione oxime with the one or more stabilizing surfactants as defined in claim 1, thereby producing a stabilized composition.

20. The method of claim 19 further comprising adding to a diluent in any order:
a) one or more stabilizing surfactants;
b) one or more adjuvants; and
c) a cyclohexanedione oxime;
thereby producing a stabilized composition.

## Patentansprüche

1. Zusammensetzung, die Folgendes umfasst:
ein Cyclohexandionoxim oder ein landwirtschaftlich akzeptables Salz davon; und
eine wirksame Menge eines oder mehrerer stabilisierender Tenside zur Bereitstellung eines stabilisierten Cyclohexandionoxims,wobei das Tensid eine Mischung aus einem oder mehreren anionischen Tensiden und einem oder mehreren nicht-ionischen Tensiden umfasst,wobei das anionische Tensid ausgewählt ist aus der Gruppe bestehend ausPhosphorsäuremono- und -diester langkettiger Alkohole mit 14 bis 22 Kohlenstoffatomen und deren Salzen, Phosphorsäuremono- und -diester von Alkylenoxid-Additionsprodukten langkettiger Alkohole mit 14 bis 22 Kohlenstoffatomen und deren Salzen,Alkylsulfaten mit 14 bis 22 C-Atomen, Polyoxyethylenalkylethersulfaten von Alkoholen mit 14 bis 22 C-Atomen, Alkansulfonaten mit 14 bis 22 C-Atomen und Olefinsulfonaten mit 14 bis 22 C-Atomen, undwobei das nicht-ionische Tensid ausgewählt ist aus der Gruppe bestehend aus Rizinusölethoxylaten, Alkoholethoxylaten, Tristyrylphenolethoxylaten, ethoxylierten Sorbitanfettsäureestern und Mischungen davon;
wobei die Zusammensetzung frei von einer epoxidierten Ölfettsäure oder einem epoxidierten Ester einer Fettsäure ist.

2. Zusammensetzung nach Anspruch 1, die ferner ein Verdünnungsmittel umfasst, wobei das Verdünnungsmittel ein unpolares Lösungsmittel ist, das ein aliphatischer Kohlenwasserstoff, ein aromatischer Kohlenwasserstoff oder ein Alkylester ist,wobei der aromatische Kohlenwasserstoff Benzol, Toluol, Xylol, ein substituiertes oder ein unsubstituiertes Naphthalin, ein monoalkylierter Aromat, ein polyalkylierter Aromat oder Mischungen davon ist, undwobei der Alkylester ein Methylester von Pflanzenöl ist, wobei das Pflanzenöl Raps-, Lein-, Saflor-, Soja- oder Sonnenblumenöl ist.

3. Zusammensetzung nach Anspruch 1, das ferner ein oder mehrere Hilfsmittel umfasst, wobei das eine oder mehrere Hilfsmittel ein Pflanzenöl umfasst.

4. Zusammensetzung nach Anspruch 1, die zwischen 0,1 und 95 Gew.-% des Cyclohexandionoxims oder eines landwirtschaftlich akzeptablen Salzes oder Metallkomplexes davon enthält.

5. Zusammensetzung nach Anspruch 1, die zwischen 20 g/l und 800 g/l des Cyclohexandionoxims oder eines landwirtschaftlich akzeptablen Salzes oder Metallkomplexes davon enthält.

6. Zusammensetzung nach Anspruch 1, die zwischen 0,1 und 30 Gew.-% des einen oder der mehreren stabilisierenden Tenside enthält.

7. Zusammensetzung nach Anspruch 2, die zwischen 1 und 99 Gew.-% des Verdünnungsmittels oder Lösungsmittels oder zwischen 10 und 80 Gew.-% des Lösungsmittels enthält.

8. Zusammensetzung nach Anspruch 1 bis 7, wobei das nicht-ionische Tensid ausgewählt ist aus der Gruppe bestehend aus Rizinusölethoxylaten, Tristyrylphenolethoxylaten, ethoxylierten Sorbitanfettsäureestern und Mischungen davon.

9. Zusammensetzung nach Anspruch 1 bis 8, wobei das Cyclohexandionoxim oder ein landwirtschaftlich akzeptables Salz davon ausgewählt ist aus der Gruppe bestehend ausMethyl(E)-(RS)-3-[1-(alloxyimino)butyl]-4-hydroxy-6,6-dimethyl-2-oxocyclohex-3-enecarboxylat), 5-(3-Butyryl-2,4,6-trimethylphenyl)-2-(1-ethoxyiminopropyl)-3-hydroxycyclohex2-enon),(2-{1-[2-(4-Chlorphenoxy)propoxyimino]butyl}-3-hydroxy-5-thian-3-ylcyclohex-2-enon), (±)-2-[(E)-1-[(E)-3-Chlorallyloxyimino]propyl]-5-[2-(ethylthio)propyl]-3-bydroxycyclohex-2-enon),(±)-2-[1-(Ethoxyimino)butyl]-3-hydroxy-5-thian-3-ylcyclohex-2-enon), (±)-(EZ)-2-(1-Ethoxyiminobutyl)-5-[2-(ethylthio)propyl]-3-hydroxycyclohex-2-enon),(EZ)-(RS)-2-{1-[(2E)-3-Chlorallyloxyiminojpropyl }-3-hydroxy-5-perhydropyran-4-ylcyclo-hex-2-en-1-on), 2-[1-(Ethoxyimino)propyl]-3-hydroxy-5-mesitylcyclohex-2-enon) und 2-[1-[[2-(4-Chlorphenoxy)propoxy]imino]butyl]-3-hydroxy-5-(tetrahydro-2H-thiopyran-3-yl)-2-cyclohexen-1-on.

10. Zusammensetzung nach Anspruch 1 bis 8, wobei das Cyclohexandionoxim oder ein landwirtschaftlich akzeptables Salz davon Folgendes umfasst:(±)-2-[(E)-1-[(E)-3-Chlorallyloxyimino]propyl]-5-[2-(ethylthio)propyl]-3-hydroxycyclohex-2-enon),oder ein Salz davon.

11. Zusammensetzung nach einem der Ansprüche 1 bis 8, wobei die Zusammensetzung in Form eines emulgierbaren Konzentrats, einer Mikroemulsion, eines benetzbaren Pulvers, eines Granulats, eines Pellets, eines Staubs, eines Öls oder Aerosols, eines Suspensionskonzentrats oder einer Kapsel vorliegt.

12. Verfahren zur Unkrautbekämpfung, wobei das Verfahren das Aufbringen einer in Anspruch 1 definierten Zusammensetzung auf ein Unkraut, eine Kulturpflanze oder ein Habitatgebiet umfasst.

13. Verfahren nach Anspruch 12, wobei die Zusammensetzung ferner ein Verdünnungsmittel oder ein oder mehrere Hilfsmittel umfasst.

14. Verfahren nach Anspruch 12, wobei das Cyclohexandionoxim oder ein landwirtschaftlich akzeptables Salz davon ausgewählt ist aus der Gruppe bestehend ausMethyl(E)-(RS)-3-[1-(alloxyimino)butyl]-4-hydroxy-6,6-dimethyl-2-oxocyclohex-3-enecarboxy-1at), 5-(3-Butyryl-2,4,6-trimethylphenyl)-2-(1-ethoxyiminopropyl)-3-hydroxycyclohex-2-enon), (2-{1-[2-(4-Chlorphenoxy)propoxyimino]butyl}-3-hydroxy-5-thian-3-ylcyclohex-2-enon), (±)-2-[(E)-1-[(E)-3-Chlorallyloxyimino]propyl]-5-[2-(ethylthio)propyl]-3-hydroxycyclohex-2-enon),(±)-2-[1-(Ethoxyimino)butyl]-3-hydroxy-5-thian-3-ylcyclohex-2-enon), (±)-(EZ)-2-(1-Ethoxyiminobutyl)-5-[2-(ethylthio)propyl]-3-hydroxycyclohex-2-enon),(EZ)-(RS)-2-{1-[(2E)-3-Chlorallyloxy-imino]propyl }-3-hydroxy-5-perhydropyran-4-ylcyclo-hex-2-en-1-on), 2-[1-(Ethoxyimino)propyl]-3-hydroxy-5-mesitylcyclohex-2-enon) und 2-[1-[[2-(4-Chlorphenoxy)propoxy]imino]butyl]-3-hydroxy-5-(tetrahydro-2*H*-thiopyran-3-yl)-2-cyclohexen-1-on.

15. Verfahren nach Anspruch 12, wobei das Cyclohexandion-Oxim oder ein landwirtschaftlich akzeptables Salz davon(±)-2-[(E)-1-[(E)-3-Chlorallyloxyimino]propyl]-5-[2-(Ethylthio)propyl]-3-hydroxycyclohex-2-enon) oder ein Salz davon umfasst.

16. Verfahren nach Anspruch 12, wobei das Unkraut eine Graspflanze ist, ausgewählt aus der Gruppe bestehend ausGerste, Scheunengras, Bermudagras, Breitblättriges Signalgras, Bromes, Mais, Krabbengräser, Hahnenfußgras, Herbst-Panicum, Schwingel, Fuchsschwanzgerste, Fuchsschwanz, Grüner Fuchsschwanz, Gänsegras, Körnersorghum, Juckreizgras, Jungfernreis,Großes Krebsgras, Liebesgras, Hafer, Orchideengras, Staudengräser, Quackgras, Persische Kolbenhirse, Rispenhirse, Rotes Reisgras, Rhizom-Johnsongras, Roggen, Rygräser, Sämlings-Johnsongras, Shattercane, Glattes Krebsgras,Südwestliches Kelchgras, Sprangetops, Texas Panicum, Volontärgerste, Volontärhafer, Volontärmais, Volontärkanariensamen, Volontärweizen, Weizen, Wilder Hafer, Wilde Rispenhirse, Hexenkraut, Wolliges Bechergras, Drahtbüschel-Muhly und Zitronenfuchsschwanz.

17. Verfahren nach Anspruch 12, wobei die Zusammensetzung als Behandlung nach Pflanzenaufgang angewendet wird.

18. Verfahren nach Anspruch 12, wobei die Zusammensetzung auf eine Kulturpflanze aufgebracht wird, die eine Unkrautbekämpfung benötigt oder von unerwünschten Unkräutern bedroht ist,wobei die Kulturpflanze eine der folgenden ist: Raps, Flachs, Erbsen, Linsen, Bohnen, Leinsamen, Senf, Kichererbsen, Sonnenblumen, Kartoffeln, Luzerne, Zwiebeln und Sojabohnen.

19. Verfahren zur Herstellung einer Zusammensetzung nach Anspruch 1, wobei das Verfahren das Mischen des Cyclohexandionoxims mit einem oder mehreren stabilisierenden Tensiden nach Anspruch 1 umfasst, wodurch eine stabilisierte Zusammensetzung hergestellt wird.

20. Verfahren nach Anspruch 19, das ferner die Zugabe zu einem Verdünnungsmittel in beliebiger Reihenfolge umfasst:
a) ein oder mehrere stabilisierende Tenside;
b) ein oder mehrere Adjuvantien; und
c) ein Cyclohexandion-Oxim;
wodurch eine stabilisierte Zusammensetzung hergestellt wird.

## Revendications

1. Composition comprenant :
un oxime de cyclohexanedione ou un sel acceptable sur le plan agricole de celui-ci ; et
une quantité efficace d'un ou de plusieurs tensioactifs stabilisants pour fournir un oxime de cyclohexanedione stabilisé, dans laquelle le tensioactif comprend un mélange d'un ou de plusieurs tensioactifs anioniques et d'un ou de plusieurs tensioactifs non ioniques, dans laquelle le tensioactif anionique est choisi dans le groupe constitué par des mono et diesters phosphoriques d'alcools à chaîne longue ayant 14 à 22 atomes de carbone et leurs sels, des mono et diesters phosphoriques de produits d'addition d'oxyde d'alkylène d'alcools à chaîne longue ayant 14 à 22 atomes de carbone et leurs sels, des sulfates d'alkyle ayant 14 à 22 atomes de carbone, des sulfates d'éther alkylique de polyoxyéthylène ayant 14 à 22 atomes de carbone, des sulfonates d'alcane ayant 14 à 22 atomes de carbone, et des sulfonates d'oléfine ayant 14 à 22 atomes de carbone, et dans laquelle le tensioactif non ionique est choisi dans le groupe constitué par des éthoxylates d'huile de ricin, des éthoxylates d'alcool, des éthoxylates de tristyrylphénol, des esters d'acides gras de sorbitane éthoxylés et des mélanges de ceux-ci ;
dans laquelle la composition est exempte d'acide gras d'huile époxydée ou d'ester époxydé d'acide gras.

2. Composition selon la revendication 1, comprenant en outre un diluant, dans laquelle le diluant est un solvant non polaire qui est un hydrocarbure aliphatique, un hydrocarbure aromatique, ou un ester d'alkyle, dans laquelle l'hydrocarbure aromatique est le benzène, le toluène, le xylène, ou un naphtalène substitué ou non substitué, un aromatique monoalkylé, un aromatique polyalkylé, ou des mélanges de ceux-ci, et dans laquelle l'ester d'alkyle est un ester de méthyle d'huile végétale dans laquelle l'huile végétale est une huile de colza, de lin, de carthame, de soja ou de tournesol.

3. Composition selon la revendication 1, comprenant en outre un ou plusieurs adjuvants, dans laquelle les un ou plusieurs adjuvants comprennent une huile pour la culture.

4. Composition selon la revendication 1, comprenant entre 0,1 % et 95 % en poids de l'oxime de cyclohexanedione ou d'un sel acceptable sur le plan agricole ou complexe métallique de celui-ci.

5. Composition selon la revendication 1, comprenant entre 20 g/L à 800 g/L de l'oxime de cyclohexanedione ou d'un sel acceptable sur le plan agricole ou complexe métallique de celui-ci.

6. Composition selon la revendication 1, comprenant entre 0,1 % et 30 % en poids des un ou plusieurs tensioactifs stabilisants.

7. Composition selon la revendication 2, comprenant entre 1 % à 99 % en poids du diluant ou solvant, ou comprenant entre 10 % à 80 % en poids du solvant.

8. Composition selon les revendications 1 à 7, dans laquelle le tensioactif non ionique est choisi dans le groupe constitué par des éthoxylates d'huile de ricin, des éthoxylates de tristyrylphénol, des esters d'acides gras de sorbitane éthoxylés et des mélanges de ceux-ci.

9. Composition selon les revendications 1 à 8, dans laquelle l'oxime de cyclohexanedione ou un sel acceptable sur la plan agricole de celui-ci est choisi dans le groupe constitué par l'(E)-(RS)-3-[1-(alloxyimino)butyl]-4-hydroxy-6,6-diméthyl-2-oxocyclohex-3-ènecarboxylate) de méthyle, la 5-(3-butyryl-2,4,6-triméthylphényl)-2-(1-éthoxyiminopropyl)-3-hydroxycyclohex-2-ènone), la (2-{1-[2-(4-chlorophénoxy)propoxyimino]butyl}-3-hydroxy-5-thian-3-ylcyclohex-2-ènone), la (±)-2-[(E)-1-[(E)-3-chloroallyloxyimino]propyl]-5-[2-(éthylthio)propyl]-3-hydroxycyclohex-2-ènone), la (±)-2-[1-(éthoxyimino)butyl]-3-hydroxy-5-thian-3-ylcyclohex-2-ènone), (±)-(EZ)-2-(1-éthoxyiminobutyl)-5-[2-(éthylthio)propyl]-3-hydroxycyclohex-2-ènone), la (EZ)-(RS)-2-{ 1-[(2E)-3-chloroallyloxy-imino]propyl}-3-hydroxy-5-perhydropyran-4-ylcyclo-hex-2-èn-1-one), la 2-[1-(éthoxyimino)propyl]-3-hydroxy-5-mésitylcyclohex-2-ènone), et la 2-[1-[[2-(4-chlorophénoxy)propoxy]imino]butyl]-3-hydroxy-5-(tétrahydro-2*H*-thiopyran-3-yl)-2-cyclohexèn-1-one.

10. Composition selon les revendications 1 à 8, dans laquelle l'oxime de cyclohexanedione ou un sel acceptable sur le plan agricole de celui-ci comprend de la (±)-2-[(E)-1-[(E)-3-chloroallyloxyimino]propyl]-5-[2-(éthylthio)propyl]-3-hydroxycyclohex-2-ènone), ou un sel de celle-ci.

11. Composition selon les revendications 1 à 8, dans laquelle la composition se présente sous la forme d'un concentré émulsifiable, d'une microémulsion, d'une poudre mouillable, d'un granulé, d'une pastille, d'une poussière, d'une huile ou d'un aérosol, d'un concentré en suspension, ou d'une gélule.

12. Procédé de lutte contre les mauvaises herbes, ledit procédé comprenant l'application d'une composition telle que définie dans la revendication 1 sur une mauvaise herbe, une culture, ou une zone d'habitat.

13. Procédé selon la revendication 12, dans lequel la composition comprend en outre un diluant ou un ou plusieurs adjuvants.

14. Procédé selon la revendication 12, dans lequel l'oxime de cyclohexanedione ou un sel acceptable sur la plan agricole de celui-ci est choisi dans le groupe constitué par l'(E)-(RS)-3-[1-(alloxyimino)butyl]-4-hydroxy-6,6-diméthyl-2-oxocyclohex-3-ènecarboxylate) de méthyle, la 5-(3-butyryl-2,4,6-triméthylphényl)-2-(1-éthoxyiminopropyl)-3-hydroxycyclohex-2-ènone), la (2-{1-[2-(4-chlorophénoxy)propoxyimino]butyl}-3-hydroxy-5-thian-3-ylcyclohex-2-ènone), la (±)-2-[(E)-1-[(E)-3-chloroallyloxyimino]propyl]-5-[2-(éthylthio)propyl]-3-hydroxycyclohex-2-ènone), la (±)-2-[1-(éthoxyimino)butyl]-3-hydroxy-5-thian-3-ylcyclohex-2-ènone), (±)-(EZ)-2-(1-éthoxyiminobutyl)-5-[2-(éthylthio)propyl]-3-hydroxycyclohex-2-ènone), la (EZ)-(RS)-2-{1-[(2E)-3-chloroallyloxy-imino]propyl}-3-hydroxy-5-perhydropyran-4-ylcyclo-hex-2-èn-1-one), la 2-[1-(éthoxyimino)propyl]-3-hydroxy-5-mésitylcyclohex-2-ènone), et la 2-[1-[[2-(4-chlorophénoxy)propoxy]imino]butyl]-3-hydroxy-5-(tétrahydro-2*H*-thiopyran-3-yl)-2-cyclohexèn-1-one.

15. Procédé selon la revendication 12, dans lequel l'oxime de cyclohexanedione ou un sel acceptable sur le plan agricole de celui-ci comprend de la (±)-2-[(E)-1-[(E)-3-chloroallyloxyimino]propyl]-5-[2-(éthylthio)propyl]-3-hydroxycyclohex-2-ènone), ou un sel de celle-ci.

16. Procédé selon la revendication 12, dans lequel la mauvaise herbe est une plante herbacée choisie dans le groupe constitué par l'orge, le pied-de-coq, le chiendent pied-de-poule, Brachiaria à feuilles larges, les bromes, le maïs, le chiendent de boeuf, le pied-de-poule, le panic d'automne, la fétuque, l'orge queue-d'écureuil, les sétaires, la sétaire verte, l'éleusine des Indes, le sorgho complet, l'herbe queue-de-rat, le blé du Dekkan, le grand chiendent-de-boeuf, l'éragrostide, l'avoine, le dactyle pelotonné, les herbes vivaces, le chiendent, l'ivraie de Perse, le millet commun, le riz rouge, le rhizome de sorgho d'Alep, le seigle, les ivraies, les grains de sorgho d'Alep, le sorgho commun, la digitaire filiforme, Eriochloa acuminata, les Leptochloa, le panic du Texas, l'orge spontanée, l'avoine spontanée, le maïs spontané, la graine à canaris spontanée, le blé spontané, le blé, l'avoine sauvage, le millet sauvage, le panic capillaire, l'ériochloé velue, la muhlenbergie du Mexique, et la sétaire glauque.

17. Procédé selon la revendication 12, dans lequel la composition est appliquée en tant que traitement de post-levée.

18. Procédé selon la revendication 12, dans lequel la composition est appliquée sur une plante de culture qui nécessite une lutte contre les mauvaises herbes ou présente un risque d'herbes indésirables, dans lequel la plante de culture est l'un quelconque parmi le colza, le lin cultivé, les pois, les lentilles, les fèves, le lin oléagineux, la moutarde, le pois chiche, le tournesol, la pomme de terre, le semis de luzerne, l'oignon, et le soja.

19. Procédé de production d'une composition telle que définie dans la revendication 1, le procédé comprenant le mélange de l'oxime de cyclohexanedione avec les un ou plusieurs tensioactifs stabilisants tels que définis dans la revendication 1, pour ainsi produire une composition stabilisée.

20. Procédé selon la revendication 19 comprenant en outre l'ajout à un diluant dans un ordre quelconque :
a) un ou plusieurs tensioactifs stabilisants ;
b) un ou plusieurs adjuvants ; et
c) un oxime de cyclohexanedione ;
pour ainsi produire une composition stabilisée.
